# EUROPÄISCHE PATENTANMELDUNG

(11) **EP 3 730 233 A1**
(43) Veröffentlichungstag der Anmeldung: **28.10.2020**
(21) Anmeldenummer: 19171104.3
(22) Anmeldetag: 25.04.2019
(51) Int. Cl.: B22F 3/105, B22F 3/24, B33Y 10/00, B33Y 30/00, B33Y 40/00

(54) **VERFAHREN ZUR HERSTELLUNG EINES METALLBAUTEILS**

(71) Anmelder: Hirtenberger Engineered Surfaces GmbH, 2552 Hirtenberg (AT)
(72) Erfinder: Halmdienst, Martina, 2620 Natschbach (AT); Hansal, Wolfgang, 2753 Markt Piesting (AT); Hansal, Selma, 2753 Markt Piesting (AT); Pfaffeneder-Kmen, Martin, 1220 Wien (AT); Sandulache, Gabriela, 2560 Berndorf (AT)
(74) Vertreter: Schwarz & Partner Patentanwälte OG

(57) **Zusammenfassung**

Verfahren zur Herstellung eines Metallbauteils, wobei in einem ersten Schritt ein Rohmetallbauteil (A) mit Hilfsstrukturen (E) durch additive Fertigung hergestellt wird, indem in einem Bauraum auf einer Bauplatte (D) Metallpulver aufgebracht wird, wobei das Metallpulver durch selektives Laser- oder Elektronenstrahlschmelzen zum Rohmetallbauteil (A) gefertigt wird, wobei das Rohmetallbauteil (A) an der Bauplatte (D) mittels Ankerstrukturen (B) befestigt wird, wobei in einem zweiten Schritt anschließend der mit den Ankerstrukturen (B) an der Bauplatte (D) befestigte Rohmetallbauteil (A) aus dem Bauraum genommen wird und danach der mittels Ankerstrukturen (B) an der Bauplatte (D) befestigte Rohmetallbauteil (A) einer chemischen, elektrochemischen oder chemischen und elektrochemischen Nachbehandlung zum Entfernen der Hilfsstrukturen unterzogen wird, worauf in einem dritten Schritt die Ankerstrukturen (B) mechanisch entfernt werden.

## Beschreibung

Die Erfindung betrifft ein Verfahren zur Herstellung eines Metallbauteils, wobei in einem ersten Schritt ein Rohmetallbauteil mit Hilfsstrukturen durch additive Fertigung hergestellt wird, indem in einem Bauraum auf einer Bauplatte Metallpulver aufgebracht wird, welches Pulver durch selektives Laser- oder Elektronenstrahlschmelzen zum Rohmetallbauteil gefertigt wird.

### HINTERGRUND DER ERFINDUNG

Mittels sogenannter additiver Fertigungsverfahren werden Bauteile aus z. B. einem Pulver aufgebaut. Sie bilden daher den Gegensatz zu subtraktiven Fertigungsverfahren (wie z. B. zerspanenden Verfahren), bei welchen Bauteile aus einem größeren Teil, z. B. einem Block, gefertigt werden. Die additive Fertigung hat gegenüber herkömmlichen subtraktiven Verfahren einige Vorteile. Hierbei wären unter anderem die rasche Individualisierbarkeit einzelner Bauteile, sowie eine außerordentliche Geometriefreiheit zu nennen. Für die additive Fertigung von Metallbauteilen eignen sich als Materialien unter anderem Titan, Aluminium, Nickelbasislegierungen, Kobaltchrom, Kupfer, Wolfram und andere hochschmelzende Refraktärmetalle, sowie Stähle und Legierungen der beschriebenen Metalle.

Ein großer Nachteil additiver Fertigungsverfahren ist die aufwändige Nacharbeit der Rohbauteile, insbesondere von metallischen Rohbauteilen, welche aus dem Pulverbett geschmolzen werden. Bei solchen Pulverbettverfahren rastert ein Laser- oder Elektronenstrahl die oberste Schicht eines metallischen Pulverbetts ab und verschmilzt so die einzelnen Metallpartikel des Pulverbetts. Anschließend wird eine weitere Schicht des metallischen Pulvers aufgebracht und der Prozess wiederholt sich so lange bis das komplette Bauteil im Bauraum aufgebaut wurde.

Aus verschiedenen Gründen ist es notwendig, dass bei dem beschriebenen Bauprozess zusätzlich zum Bauteil Hilfsstrukturen mitgeneriert werden. Diese schützen das Bauteil einerseits unter anderem vor Deformierung durch mechanische Spannung und transportieren andererseits Wärme ab.

Nach Stand der Technik erfolgt die Nacharbeit eines additiv generierten Bauteils so, dass das Konglomerat aus Bauteil, Bauplatte und Hilfsstruktur aus dem Bauraum entfernt und entpulvert wird. Weiters wird die Bauplatte vom Bauteil inkl. Hilfsstrukturen getrennt.

In manchen Fällen ist im Laufe der Prozesskette noch eine ein- oder mehrstufige Wärmebehandlung nötig. Danach werden die Hilfsstrukturen mechanisch mithilfe eines Handschleifgeräts oder auch mit Hammer und Meißel entfernt. Letztendlich wird die Oberfläche des Bauteils poliert (z.B. durch Sandstrahlen, Gleitschleifen, Elektropolieren, etc.).

Diese mechanische Art der Nachbearbeitung birgt ein hohes Risiko, da bei Abrutschen oder Verkeilen des Werkzeuges das ganze Bauteil funktionsuntüchtig gemacht werden kann. Außerdem verhindern diese aufwändigen manuellen Arbeiten Losgrößen, die über Kleinserien hinausgehen, da der Prozess dann nicht mehr wirtschaftlich ist.

### KURZBESCHREIBUNG DER ERFINDUNG

Aufgabe der vorliegenden Erfindung ist daher die Bereitstellung eines Verfahrens zur Herstellung von Metallbauteilen mittels eines additiven Verfahrens, bei dem Hilfsstrukturen mittels eines reproduzierbaren, voll automatisierbaren Prozess entfernt werden können.

Gelöst wird diese Aufgabe durch ein Verfahren zur Herstellung eines Metallbauteils, wobei in einem ersten Schritt ein Rohmetallbauteil mit Hilfsstrukturen durch additive Fertigung hergestellt wird, indem in einem Bauraum auf einer Bauplatte Metallpulver aufgebracht wird, wobei das Metallpulver durch selektives Laser- oder Elektronenstrahlschmelzen zum Rohmetallbauteil gefertigt wird, wobei das Rohmetallbauteil an der Bauplatte mittels Ankerstrukturen befestigt wird, wobei in einem zweiten Schritt anschließend der mit den Ankerstrukturen an der Bauplatte befestigte Rohmetallbauteil aus dem Bauraum genommen wird und danach der mittels Ankerstrukturen an der Bauplatte befestigte Rohmetallbauteil einer chemischen, elektrochemischen oder chemischen und elektrochemischen Nachbehandlung zum Entfernen der Hilfsstrukturen unterzogen wird, worauf in einem dritten Schritt die Ankerstrukturen mechanisch entfernt werden.

Aus technischen Gründen ist es notwendig, dass bei der additiven Fertigung (indem ein Metallpulver durch selektives Laser- oder Elektronenstrahlschmelzen des Metallpulvers zum Bauteil gefertigt wird) zusätzlich zum Bauteil sogenannte Hilfsstrukturen mitgeneriert werden, um das Bauteil vor Deformierung durch mechanische Spannung und übermäßiger lokalen Temperaturspitzen zu schützen.

Als Hilfsstrukturen werden im Rahmen der Erfindung also
- Stützstrukturen, welche das Bauteil während der Fertigung vor Deformierung oder Umfallen stabilisieren,
- Wärmeableitfahnen, welche für einen Wärmetransport an die Oberfläche des Bauteils während der Fertigung sorgen, und/oder
- Sinterkuchen
verstanden. Diese Hilfsstrukturen werden im zweiten Schritt bei der chemischen oder elektrochemischen Nachbehandlung entfernt.

Davon zu unterscheiden sind die Ankerstrukturen. Diese haben die Aufgabe zu verhindern, dass das Bauteil von der Bauplatte fällt, sobald die Hilfsstrukturen (dabei insbesondere Stützstrukturen oder Sinterkuchen) entfernt wurden. D.h. die Erfindung sieht erfindungsgemäß Ankerstrukturen vor, welche das Bauteil auf der Bauplatte halten und die chemische oder elektrochemische Nachbehandlung überstehen. Als Ankerstrukturen kommen Geometrien mit einem geringen Oberflächen-zu-Volumen-Verhältnis in Frage, z.B. solide Säulen.

Die Fertigung des Rohmetallbauteils im ersten Schritt erfolgt so, dass ein Laser- oder Elektronenstrahl die oberste Schicht eines metallischen Pulverbetts abrastert und verschmilzt. Anschließend wird eine weitere Schicht des metallischen Pulvers aufgebracht und der Prozess wiederholt sich so lange bis das komplette Bauteil im Bauraum aufgebaut wurde.

In einer bevorzugten Ausführungsvariante ist vorgesehen, dass die Ankerstrukturen durch selektives Laser- oder Elektronenstrahlschmelzen gefertigt werden. Diese Vorgehensweise hat den Vorteil, dass das Metallbauteil und die Ankerstrukturen zeitgleich und automatisiert gefertigt werden können. Werden hingegen gesondert hergestellte Ankerstrukturen eingesetzt, müssen diese genau platziert werden, damit sie im Fertigungsprozess für das Rohmetallbauteil mit Hilfsstrukturen durch additive Fertigung an den korrekten Stellen positioniert sind. In diesem Fall bestehen die Ankerstrukturen auch aus demselben Material wie das Bauteil selbst.

In den Ausführungsvarianten, bei denen die Ankerstrukturen aus demselben Material wie das Bauteil bestehen, ist die Dichte der Ankerstrukturen im Wesentlichen gleich zum Bauteil. Hilfsstrukturen, dabei besonders die Stützstrukturen oder der Sinterkuchen, werden in Pulverbettverfahren meist mit geringerer Energie verschmolzen, sodass diese poröser als das Bauteil sind. Daher ist die Dichte dieser Hilfsstrukturen geringer als die Dichte des Bauteils.

In einer Ausführungsvariante ist vorgesehen, dass die Bauplatte metallisch ist und elektrisch kontaktiert wird, wenn das Rohmetallbauteil im zweiten Schritt der chemischen, elektrochemischen oder chemischen und elektrochemischen Nachbehandlung unterzogen wird. Die Bauplatte kann damit zusätzlich eine elektrische Leitfunktion übernehmen. Bevorzugt ist eine elektrische Kontaktierung der Bauplatte im Falle einer elektrochemischen oder chemisch und elektrochemischen Nachbehandlung.

In einer Ausführungsvariante ist vorgesehen, dass das Rohmetallbauteil an der Bauplatte nur mittels Ankerstrukturen verbunden wird, während die Grundfläche des Rohmetallbauteils nicht mit der Bauplatte befestigt wird, d.h. verbindungsfrei bleibt.

Außerdem kann vorgesehen sein, dass die Bauplatte nach dem ersten Schritt und vor dem zweiten Schritt mit einer Schutzschicht versehen wird. Eine solche Schutzschicht schützt die Bauplatte im nachfolgenden Schritt der chemischen und/oder elektrochemischen Nachbehandlung des Rohmetallbauteils.

Die Schutzschicht kann durch Lackieren, vorzugweise Tauchlackieren, aufgebracht werden. Dazu wird der Verbund aus Rohmetallbauteil und Bauplatte teilweise in ein Bad mit Lack getaucht. Der Verbund aus Rohmetallbauteil und Bauplatte wird dabei mit dem Bauplatte an der Unterseite nur so in das Bad mit Lack eingetaucht, bis die Bauplatte vollständig in den Lack eintaucht und das Rohmetallbauteil nicht in den Lack eintaucht.

Als Alternative oder gegebenenfalls zusätzlich zur Schutzschicht kann die Bauplatte nach dem ersten Schritt und vor dem zweiten Schritt mit einem Gehäuse abgedeckt werden. Das Gehäuse kann z. B. aus einem Kunststoff wie z. B. einem Polyolefin, bevorzugt Polypropylen (PP) bestehen. Bevorzugt dichtet das Gehäuse die Bauplatte von der chemischen und/oder elektrochemischen Nachbehandlung ab. Für den Fall, dass das Gehäuse zusätzlich zur Schutzschicht vorgesehen ist, sollte die Schutzschicht aufgebracht werden, bevor die Bauplatte mit dem Gehäuse abgedeckt wird.

Weiters kann vorgesehen sein, dass auf die Bauplatte zumindest in dem Bereich, in welchem Hilfsstrukturen die Bauplatte kontaktieren, zuvor zumindest eine Metallschicht aufgebracht wird, indem Pulver durch selektives Laser- oder Elektronenstrahlschmelzen zur Metallschicht gefertigt wird. In diesem Fall sind die Ankerstrukturen unter Umständen mittelbar an der Bauplatte befestigt, da die Metallschicht in diesem Fall zwischen Ankerstruktur und Bauplatte sein kann. Gegebenenfalls können auch mehrere Metallschichten zwischen Hilfsstrukturen und Bauplatte aufgebracht werden.

Um die durchgehende Automatisierbarkeit der Prozesskette zu gewährleisten, soll sich das Bauteil während der kompletten Nacharbeit auf der Bauplatte befinden. Diese dient dann gleichzeitig als Warenträger und gegebenenfalls elektrische Kontaktierung für die einzelnen Prozessschritte.

Die Hilfsstrukturen sind poröse gitterartige Strukturen, welche sich bei geeigneter Wahl der Parameter durch einen chemischen oder elektrochemischen Angriff vor dem Bauteil auflösen lassen. Eine mechanische Entfernung der Hilfsstrukturen (z. B. durch Sandstrahlen) direkt auf der Bauplatte wäre rein theoretisch denkbar, solange die Geometrie des Bauteils nicht zu kompliziert ist. Sobald schwer oder nicht zugängliche Bereiche am Bauteil vorhanden sind, welche jedoch zu bearbeiten sind, ist eine mechanische Nacharbeit nicht mehr möglich. Bei additiv gefertigten Bauteilen ist in den meisten Fällen davon auszugehen, dass dies der Fall ist, da die Geometriefreiheit des Verfahrens üblicherweise ausgenutzt wird.

Sollen die Hilfsstrukturen chemisch oder elektrochemisch aufgelöst werden, kann die Bauplatte als Warenträger und elektrische Kontaktierung fungieren. Generell gibt es hier zwei Situationen:
Die Bauplatte besteht aus demselben Material wie das Bauteil oder die Bauplatte besteht aus einem anderen Material als das Bauteil.

Die Bauplatte kann durch eine oder mehrere aufgeschweißte Schichten desselben Materials wie das Bauteil geschützt werden. Im Anschluss kann die Oberfläche des Bauteils durch Elektropolieren, mechanisches Polieren oder chemisches Polieren direkt auf der Bauplatte veredelt werden. Letztendlich werden die Ankerstrukturen durchtrennt, um Bauteil und Bauplatte zu trennen.

Die Bauplatte wird dann erneut für ein Verfahren zur Herstellung eines Metallbauteils gemäß der Erfindung verwendet.

Zuvor kann die Bauplatte gereinigt und/oder chemisch oder mechanisch geglättet werden.

In einer Ausführungsvariante ist vorgesehen, dass die Bauplatte am Metallbauteil verbleibt. In diesem Fall werden die Ankerstrukturen zwar ebenfalls nach der Fertigung entfernt, allerdings wurde das Metallbauteil so auf der Bauplatte gefertigt, dass es fest mit der Bauplatte verbunden ist. Auf diese Art wird ein Hybridbauteil erzeugt, welches eine Bauplatte aufweist, auf welchem das additiv gefertigte Bauteil befestigt ist. Die Bauplatte könnte gegebenenfalls in einem vorangegangenen Schritt in einem subtraktiven Verfahren oder additiven Verfahren hergestellt worden sein. Da die Bauplatte geometrisch einfacher als das additiv gefertigte Bauteil ist, ist ein subtraktives Verfahren kostengünstiger.

In der Ausführungsvariante für das Hybridbauteil wird daher im ersten Schritt das Rohmetallbauteil mit Hilfsstrukturen durch additive Fertigung hergestellt, indem in einem Bauraum auf einer Bauplatte Metallpulver aufgebracht wird, wobei das Metallpulver durch selektives Laser- oder Elektronenstrahlschmelzen zum Rohmetallbauteil gefertigt wird, wobei das Rohmetallbauteil an der Bauplatte mittels Ankerstrukturen und an der Grundfläche des Rohmetallbauteils befestigt werden, wobei im dritten Schritt die Ankerstrukturen mechanisch entfernt werden und das fertige Metallbauteil und die Bauplatte an der Grundfläche des Bauteils verbunden zurückbleiben.

### AUSFÜHRLICHE BESCHREIBUNG DER ERFINDUNG

Nachfolgend werden vorteilhafte Ausführungen, Details und konkrete Beispiele der Erfindung im Detail erläutert.

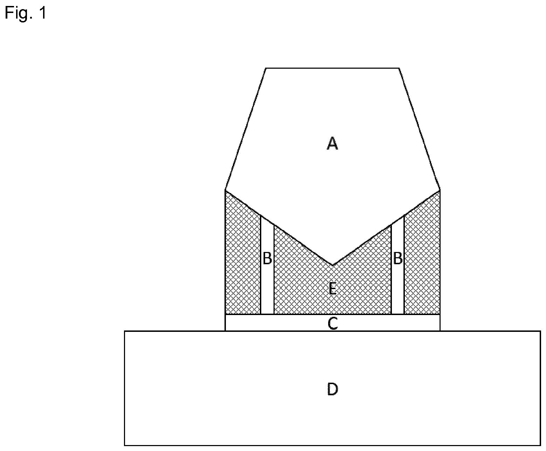

Fig. 1 zeigt schematisch den Aufbau eines an der Bauplatte nachzubearbeitenden Bauteils.

Fig. 1 zeigt schematisch ein additiv gefertigtes Rohbauteil A, welches im Sinne der Erfindung nachzubearbeiten wäre. Das Rohbauteil A (aus Material 1) wird mittels Ankerstrukturen B (ebenfalls aus Material 1) auf der Bauplatte D (aus Material 2) befestigt. Zusätzlich sind noch zumindest eine oder mehrere schützende Schichten (wiederum aus Material 1) vorgesehen. In Fig. 1 sind ebenfalls Hilfsstrukturen E (auch aus Material 1) zur mechanischen Stützung des Rohbauteils A erkennbar.

Im ersten Schritt wird das Rohmetallbauteil A mit Hilfsstrukturen E durch additive Fertigung hergestellt wird, indem in einem Bauraum auf einer Bauplatte D Metallpulver aufgebracht wird, wobei das Pulver durch selektives Laser- oder Elektronenstrahlschmelzen zum Rohmetallbauteil A gefertigt wird, wobei das Rohmetallbauteil A mittels Ankerstrukturen B an der Bauplatte D befestigt wird. Dieses Zwischenprodukt ist in Fig. 1 erkennbar.

Anschließend wird im zweiten Schritt der mittels Ankerstrukturen B an der Bauplatte D befestigte Rohmetallbauteil A aus dem Bauraum entfernt wird und danach der mittels Ankerstrukturen B an der Bauplatte D befestigte Rohmetallbauteil A einer chemischen oder elektrochemischen oder chemisch/elektrochemisch kombinierten Nachbehandlung zum Entfernen der Hilfsstrukturen E unterzogen. Im letzten Schritt werden die Ankerstrukturen mechanisch entfernt, sodass das fertige Bauteil aber auch die Bauplatte D (getrennt voneinander) zurückbleiben.

Ein Aspekt der Erfindung betrifft also die Nachbearbeitung von additiv gefertigten Bauteilen direkt auf der Bauplatte. Dazu werden in einem additiven Verfahren (selektives Laser- oder Elektronenstrahlschmelzen aus dem Pulverbett) Bauteile auf einer Bauplatte generiert. Diese werden durch solide Ankerstrukturen (z.B. Haltesäulen) auf der Bauplatte gehalten. Zusätzlich zu den Ankerstrukturen befinden sich gitterartige, für den Bauprozess obligatorische Hilfsstrukturen, auf der Bauplatte, dem Bauteil, bzw. zwischen Bauplatte und Bauteil. Diese werden in einem chemischen oder elektrochemischen Verfahren entfernt, sodass nur Bauteil, Bauplatte und Ankerstrukturen (Haltesäulen) übrigbleiben.

Je nach Prozessbedingungen sollte die Bauplatte von den Prozessmedien geschützt werden. Die Bauplatte soll unter Umständen nämlich nach dem Prozess für einen weiteren Baujob wieder zur Verfügung stehen. Hier gibt es drei verschiedene Fälle:
- Die Bauplatte ist aus dem gleichen Material wie das Bauteil. Der Materialabtrag von der Bauplatte in der chemischen oder elektrochemischen Nachbehandlung ist üblicherweise wesentlich geringer als jener der Hilfsstrukturen. In den meisten Fällen kann dieser Materialabtrakt akzeptiert werden und die Bauplatte kann gegebenenfalls nach kleineren präparativen Arbeiten nach Abtrennen der Ankerstrukturen für den nächsten Baujob wiederverwendet werden.
- Die Bauplatte ist aus einem anderen Material wie das Bauteil und ist gegenüber den Prozessmedien inerter als das Bauteil und die Stützstrukturen. In diesem Fall sind keine weiteren vorbereitenden Arbeiten notwendig. Der Abtrag an der Bauplatte in der chemischen oder elektrochemischen Nachbehandlung ist zu vernachlässigen und diese kann nach Abtrennen der Ankerstrukturen weitere Baujobs eingesetzt werden.
- Die Bauplatte ist aus einem anderen Material wie das Bauteil und wird von den Prozessmedien stärker angegriffen als das Bauteil und die Stützstrukturen. In diesem Fall ist es vorteilhaft, wenn in vorbereitenden Arbeiten die Bauplatte geschützt wird.

Eine Möglichkeit die Bauplatte zu schützen ist, diese zu lackieren. Eine Tauchlackierung kann voll automatisiert werden und liefert reproduzierbare Qualitäten. Problematisch sind jedoch die Stellen auf der Bauplatte unter den Stützstrukturen. Diese werden von den meisten eher viskosen Lacken schwer erreicht, während wässrige Elektrolyte und Prozessmedien in die perforierten Stützstrukturen gelangen und hier die Bauplatte angreifen.

Um dies zu verhindern, müssen beim 3D-Druck eine oder mehrere Schichten des gleichen Materials wie das Bauteil unter den Stützstrukturen auf die Bauplatte aufgeschmolzen werden. Diese Schicht muss dicker als der zu erwartende Abtrag sein. Die Bauplatte mit den sich darauf befindenden Bauteil und Stützstrukturen kann wie oben beschrieben tauchlackiert werden, um die restlichen Flächen der Bauplatte zu schützen.

Der Bauteil kann neben Additiv gefertigten Ankerstrukturen auch mit der Hilfe von externen Ankerstrukturen aufgebaut werden. Dann muss der Bauteil separat mit den Ankerstrukturen aufgehängt werden, damit dieser nicht in das Prozessbecken fällt, bzw. damit der elektrische Kontakt gewährleistet ist. Bei rein chemischer Entfernung der Stützstrukturen ist es ebenfalls möglich den Teil nicht separat aufzuhängen. Ein Sieb oder ein Netz würde diesen auffangen.

Nach Entfernung der Stützstrukturen können die Bauteile direkt auf der Bauplatte poliert werden. Dabei dient die Bauplatte wieder als Warenträger. Bei mechanischen Poliermethoden, wie z. B. Sandstrahlen, oder anderen mechanischen Nacharbeiten, wie z. B. Fräsen, müssen die Ankerstrukturen entsprechend mechanisch belastbar ausgeführt sein.

Sollen die Teile chemisch oder elektrochemisch poliert werden, so dienen die Ankerstrukturen als Warenträger, bzw. elektrische Kontaktierung. In diesem Fall müssen sie weniger mechanisch belastbar sein.

### Beispiel 1:

Zunächst wird ein Rohmetallbauteil mit Hilfsstrukturen additiv auf einer Bauplatte gefertigt. Das zu bearbeitende Rohmetallbauteil besteht aus dem Bauteil selbst (Edelstahl 316L), Ankerstrukturen (Edelstahl 316L), Hilfsstrukturen in Form von Stützstrukturen (Edelstahl 316L), einer schützenden Schicht (Edelstahl 316L) und einer Bauplatte aus Werkzeugstahl. Die Bauplatte wird zunächst an der Rückseite verschraubt und kontaktiert. Das Bauplatte wird tauchlackiert, sodass diese komplett bedeckt, der Bauteil selbst aber nicht mit dem Lack in Berührung kommt. Danach wird die Hilfsstruktur (Stützstruktur) mit einer wässrigen Lösung bestehend aus in einer Lösung 60 Vol% Wasser 40 Vol% H₂SO₄ und 100 g/l NH₄HF₂ für 60 bis 240 Minuten bei 30 bis 80 °C chemisch entfernt. Weiters wird der Bauteil auf der Platte chemisch, bzw. elektrochemisch poliert. Die Ankerstrukturen werden durchtrennt und deren Reste vom Bauteil mechanisch entfernt.

### Beispiel 2:

Zunächst wird ein Rohmetallbauteil mit Hilfsstrukturen additiv auf einer Bauplatte gefertigt. Das zu bearbeitende Rohmetallbauteil besteht aus dem Bauteil selbst (Ti6Al4V), Ankerstrukturen (Ti6Al4V), Hilfsstrukturen in Form von Stützstrukturen (Ti6Al4V), einer schützenden Schicht (Ti6Al4V) und einer Bauplatte aus Edelstahl. Die Bauplatte wird zunächst an der Rückseite verschraubt und kontaktiert. Das Bauplatte wird tauchlackiert, sodass diese komplett bedeckt, der Bauteil selbst aber nicht mit dem Lack in Berührung kommt. Danach wird die Hilfsstruktur (Stützstruktur) in einer Lösung 60 Vol% Wasser 40 Vol% H₂SO₄ und 33,3 g/l NH₄HF₂ elektrochemisch behandet, indem für einen Zeitraum von 30 bis 240 Minuten abwechselnd eine Spannung von 5 V für 1 bis 4 Sekunden und 25 V für 1 Sekunde bei 20 °C angelegt wurde, entfernt. Weiters wird der Teil elektrochemisch poliert. Die Ankerstrukturen werden durchtrennt und deren Reste vom Bauteil mechanisch entfernt.

### Beispiel 3:

Zunächst wird ein Rohmetallbauteil mit Hilfsstrukturen additiv auf einer Bauplatte gefertigt. Das zu bearbeitende Rohmetallbauteil besteht aus dem Bauteil selbst (Ti6Al4V), Ankerstrukturen (Ti6Al4V), Hilfsstrukturen in Form von Stützstrukturen (Ti6Al4V), einer schützenden Schicht (Ti6Al4V) und einer Bauplatte (Ti6Al4V). Die Bauplatte wird an der Rückseite verschraubt und kontaktiert. Eine Lackierung der Bauplatte ist hier nicht notwendig. Die Hilfsstruktur (Stützstruktur) wird in einer Lösung 60 Vol% Wasser 40 Vol% H₂SO₄ und 33,3 g/l NH₄HF₂ elektrochemisch behandet, indem für einen Zeitraum von 30 bis 240 Minuten abwechselnd eine Spannung von 5 V für 1 bis 4 Sekunden und 25 V für 1 Sekunde bei 20 °C angelegt wurde, entfernt. Weiters wird der Bauteil mittels Gleitschleifen poliert. Die Ankerstrukturen werden durchtrennt und deren Reste vom Bauteil mechanisch entfernt.

## Patentansprüche

1. Verfahren zur Herstellung eines Metallbauteils,
wobei in einem ersten Schritt ein Rohmetallbauteil (A) mit Hilfsstrukturen (E) durch additive Fertigung hergestellt wird, indem in einem Bauraum auf einer Bauplatte (D) Metallpulver aufgebracht wird, wobei das Metallpulver durch selektives Laser- oder Elektronenstrahlschmelzen zum Rohmetallbauteil (A) gefertigt wird,
wobei das Rohmetallbauteil (A) an der Bauplatte (D) mittels Ankerstrukturen (B) befestigt wird,
wobei in einem zweiten Schritt anschließend der mit den Ankerstrukturen (B) an der Bauplatte (D) befestigte Rohmetallbauteil (A) aus dem Bauraum genommen wird und danach der mittels Ankerstrukturen (B) an der Bauplatte (D) befestigte Rohmetallbauteil (A) einer chemischen, elektrochemischen oder chemischen und elektrochemischen Nachbehandlung zum Entfernen der Hilfsstrukturen unterzogen wird,
worauf in einem dritten Schritt die Ankerstrukturen (B) mechanisch entfernt werden.

2. Verfahren nach Anspruch 1, **dadurch gekennzeichnet, dass** die Ankerstrukturen (B) durch selektives Laser- oder Elektronenstrahlschmelzen gefertigt werden.

3. Verfahren nach Anspruch 1 oder Anspruch 2, **dadurch gekennzeichnet, dass** die Bauplatte (D) metallisch ist und elektrisch kontaktiert wird.

4. Verfahren nach einem der Ansprüche 1 bis 3, **dadurch gekennzeichnet, dass** die Bauplatte (D) nach dem ersten Schritt und vor dem zweiten Schritt mit einer Schutzschicht versehen wird.

5. Verfahren nach Anspruch 4, **dadurch gekennzeichnet, dass** die Schutzschicht durch Lackieren, vorzugweise Tauchlackieren, aufgebracht wird.

6. Verfahren nach einem der Ansprüche 1 bis 5, **dadurch gekennzeichnet, dass** die Bauplatte (D) nach dem ersten Schritt und vor dem zweiten Schritt mit einem Gehäuse abgedeckt wird.

7. Verfahren nach einem der Ansprüche 1 bis 6, **dadurch gekennzeichnet, dass** auf die Bauplatte (D) zumindest im Bereich, in welchem Hilfsstrukturen (B) die Bauplatte (D) kontaktieren, zuvor zumindest eine Metallschicht (C) aufgebracht wird, indem Pulver durch selektives Laser- oder Elektronenstrahlschmelzen zur Metallschicht (C) gefertigt wird.

8. Verfahren nach einem der Ansprüche 1 bis 7, **dadurch gekennzeichnet, dass** im dritten Schritt die Ankerstrukturen (B) mechanisch so entfernt werden, dass das fertige Metallbauteil und die Bauplatte (D) getrennt zurückbleiben.

9. Verfahren nach einem der Ansprüche 1 bis 7, **dadurch gekennzeichnet, dass** im ersten Schritt das Rohmetallbauteil (A) mit Hilfsstrukturen (E) durch additive Fertigung hergestellt wird, indem in einem Bauraum auf einer Bauplatte (D) Metallpulver aufgebracht wird, wobei das Metallpulver durch selektives Laser- oder Elektronenstrahlschmelzen zum Rohmetallbauteil (A) gefertigt wird, wobei das Rohmetallbauteil (A) an der Bauplatte (D) mittels Ankerstrukturen (B) und an der Grundfläche des Rohmetallbauteils (A) befestigt werden, wobei im dritten Schritt die Ankerstrukturen (B) mechanisch entfernt werden und das fertige Metallbauteil und die Bauplatte (D) an der Grundfläche des Bauteils verbunden zurückbleiben.
